# EUROPÄISCHE PATENTSCHRIFT

(11) **EP 2 242 689 B1**
(45) Veröffentlichungstag und Bekanntmachung des Hinweises auf die Patenterteilung: **22.04.2015**
(21) Anmeldenummer: 09711217.1
(22) Anmeldetag: 11.02.2009
(51) Int. Cl.: B64D 13/06, B64D 13/08, B64D 37/32

(54) **SYSTEM UND VERFAHREN ZUR BELÜFTUNG EINES EXPLOSIONSGEFÄHRDETEN BEREICHS EINES LUFTFAHRZEUGS**
SYSTEM AND METHOD FOR VENTILATING EXPLOSIVE REGIONS OF AN AIRCRAFT
SYSTÈME ET PROCÉDÉ POUR VENTILER UNE ZONE À RISQUES D'EXPLOSION D'UN AVION

(30) Priorität: 15.02.2008 DE 102008009274; 15.02.2008 US 28962
(43) Veröffentlichungstag der Anmeldung: 27.10.2010
(73) Patentinhaber: Airbus Operations GmbH, 21129 Hamburg (DE)
(72) Erfinder: KASTELL, Dirk, 22587 Hamburg (DE); CASAS NORIEGA, Wilson, Willy, 21147 Hamburg (DE)
(74) Vertreter: Schicker, Silvia
(86) Internationale Anmeldenummer: PCT/EP2009/000955
(87) Internationale Veröffentlichungsnummer: WO 2009/100897

(56) Entgegenhaltungen:
- WO-A-2005/063569
- GB-A- 643 019
- US-A- 2 917 903
- US-A- 3 501 050
- US-A1- 2005 115 404

## Beschreibung

Die vorliegende Erfindung betrifft ein System sowie ein Verfahren zur Belüftung eines explosionsgefährdeten Bereichs eines Luftfahrzeugs, insbesondere eines Flugzeugs.

An Bord eines Flugzeugs kann das Risiko einer Explosion in einem Treibstofftank dadurch minimiert werden, dass leere Tankbereiche mit einem Inertgas, wie z.B. Stickstoff geflutet werden. Das Inertgas verhindert die Bildung eines zündfähigen Gasgemischs über der Treibstoffoberfläche. In an einen Treibstofftank angrenzenden Flugzeugbereichen ist eine Inertisierung mittels eines Inertgases jedoch in der Regel nicht möglich. Aus diesem Grund werden derartige explosionsgefährdete Bereiche üblicherweise mit einer Folie isoliert. Darüber hinaus werden in diesen Bereichen angeordnete Komponenten, die einen Funken erzeugen könnten oder im Betrieb eine hohe Oberflächentemperatur entwickeln, explosionssicher gestaltet und mit speziellen Isolierungen versehen. Schließlich werden explosionsgefährdete Flugzeugbereiche intensiv ventiliert und drainiert, wobei Luftaustauschraten von 3 bis 5 pro Minute zu realisieren sind.

Zur Belüftung explosionsgefährdeter Flugzeugbereiche werden typischerweise separate Systeme vorgesehen, die so ausgelegt sind, dass sie in allen Betriebssituationen des Flugzeugs eine ausreichende Ventilation und Drainage der explosionsgefährdeten Flugzeugbereiche sowie eine ausreichende Kühlung von in den explosionsgefährdeten Flugzeugbereichen angeordneten wärmebelasteten Komponenten gewährleisten. Bekannte Belüftungssysteme umfassen beispielsweise einen Stauluftkanal, über den im Flugbetrieb des Flugzeugs Luft in einen zur Verminderung der Explosionsgefahr zu ventilierenden Flugzeugbereich geleitet wird. Ein typisches Kühlluftversorgungssystem ist aus Dokument WO2005/063569 bekannt, welches den nächstliegenden Stand der Technik darstellt und den Oberbegriff des Anspruchs 1 offenbart. Im Bodenbetrieb des Flugzeugs sorgt dagegen ein Ventilator für eine ausreichende Luftzufuhr in den zu ventilierenden Flugzeugbereich. Die Installation eines separaten Belüftungssystems führt zu zusätzlichen Kosten, einem erhöhten Gewicht sowie zusätzlichem Energiebedarf zum Antreiben des elektrisch oder mittels Triebwerks-Zapfluft betriebenen Ventilators.

Der Erfindung liegt die Aufgabe zugrunde, ein zuverlässig arbeitendes, einfach aufgebautes, gewichts- und einbauraumsparendes System zur Belüftung eines explosionsgefährdeten Flugzeugbereichs bereitzustellen. Ferner liegt der Erfindung die Aufgabe zugrunde, ein entsprechendes Verfahren zur Belüftung eines explosionsgefährdeten Flugzeugbereichs anzugeben.

Diese Aufgabe wird durch ein System zur Belüftung eines Bereichs eines Luftfahrzeugs mit den im Anspruch 1 angegebenen Merkmalen sowie ein Verfahren zur Belüftung eines Bereichs eines Luftfahrzeugs mit den im Anspruch 7 angegebenen Merkmalen gelöst.

Ein erfindungsgemäßes System zur Belüftung eines explosionsgefährdeten Bereichs eines Luftfahrzeugs umfasst einen Stauluftkanal mit einem Lufteinlass zur Zufuhr von Umgebungsluft in den Stauluftkanal. Der Lufteinlass des Stauluftkanals kann beispielsweise als sogenannter NACA (National Advisory Commitee for Aeronautics)-Einlass ausgebildet sein. Darüber hinaus kann der Stauluftkanal bei Bedarf einen Diffusor umfassen. Ein Luftauslass des Stauluftkanals dient dazu, Luft aus dem Stauluftkanal nach der Durchströmung des Stauluftkanals wieder an die Umgebung abzuführen. Der Stauluftkanal ist dazu eingerichtet, einer zu kühlenden Einrichtung an Bord des Luftfahrzeugs Kühlluft zuzuführen. Die zu kühlende Einrichtung kann beispielsweise ein Teil eines Flugzeugkühlsystems sein. Vorzugsweise dient der Stauluftkanal des erfindungsgemäßen Belüftungssystems der Zufuhr von Kühlluft zu Kondensatoren einer Kältemaschine des Flugzeugkühlsystems. Grundsätzlich kann die den Stauluftkanal durchströmende Luft der zu kühlenden Einrichtung unmittelbar als Kühlluft zugeführt und beispielsweise über die zu kühlende Einrichtung geblasen werden. Alternativ dazu kann die Kühlenergie der den Stauluftkanal durchströmenden Luft jedoch auch mittels einer geeigneten Einrichtung, wie z.B. eines Wärmetauschers, an die zu kühlende Einrichtung übertragen werden.

Das erfindungsgemäße Belüftungssystem umfasst ferner eine von dem Stauluftkanal abzweigende Belüftungsleitung, die einen Lufteinlass zur Zufuhr der den Stauluftkanal durchströmenden Luft aufweist. Ein Luftauslass der Belüftungsleitung ist mit einem zu belüftenden, beispielsweise einem explosionsgefährdeten Bereich des Luftfahrzeugs verbunden. Über die Belüftungsleitung kann dem zu belüftenden Luftfahrzeugbereich somit aus dem Stauluftkanal abgezweigte Luft zugeführt werden. Mit anderen Worten, bei dem erfindungsgemäßen Belüftungssystem wird kein zusätzlicher Stauluftkanal zur Belüftung benötigt. Statt dessen wird lediglich ein Stauluftkanal zur Zufuhr von Umgebungsluft zu einer zu kühlenden Einrichtung an Bord des Luftfahrzeugs und zur Zufuhr von Ventilationsluft in einen zu belüftenden Bereich des Luftfahrzeugs verwendet. Das erfindungsgemäße System stellt somit ein integriertes Kühl- und Belüftungssystem dar. Auf die Bereitstellung einer separaten Belüftungseinrichtung kann daher verzichtet werden, wodurch sich vorteilhafte Gewichts- und Einbauraumeinsparungen ergeben. In dem zu belüftenden Luftfahrzeugbereich kann eine weitere wärmebelastete Einrichtung, wie z.B. eine elektronische Komponente oder dergleichen angeordnet sein. Die dem zu belüftenden Luftfahrzeugbereich über die Belüftungsleitung zugeführte Luft wird dann gleichzeitig zur Kühlung der wärmebelasteten Komponente verwendet.

Zwischen dem Stauluftkanal und dem Lufteinlass der Belüftungsleitung ist bei dem erfindungsgemäßen System zur Belüftung eines explosionsgefährdeten Bereichs eines Luftfahrzeugs ein Speicher angeordnet, der dazu eingerichtet ist, den dynamischen Druck der durch den Stauluftkanal geführten Luftströmung zumindest teilweise in statischen Druck umzuwandeln. Durch den in dem Speicher aufgebauten statischen Druck können Druckverluste in der Luftströmung, die bei der Durchströmung der Belüftungsleitung auftreten, in vorteilhafter Weise kompenstert werden. Infolgedessen kann ein konstanter Luftvolumenstrom durch die Belüftungsleitung sowie ein gleichmäßiges Strömungsprofil beim Austritt der Luft aus dem Luftauslass der Belüftungsleitung realisiert werden.

Im Vergleich zu einer dynamischen Anordnung, bei der einen Stauluftkanal durchströmende Luft ohne Bereitstellung eines Speichers über eine Belüftungsleitung aus dem Stauluftkanal abgezweigt wird, kann bei dem erfindungsgemäßen System auf zusätzliche Strömungssteuerungseinrichtungen, wie z.B. eine Stauluftkanalauslassklappe oder einen in dem Stauluftkanal angeordneten besonders leistungsstarken Ventilator zur Gewährleistung einer ausreichenden Luftströmung durch die Belüftungsleitung verzichtet werden. Darüber hinaus muss die in die Belüftungsleitung geführte Luft bei dem erfindungsgemäßen System zur Belüftung eines explosionsgefährdeten Bereichs eines Luftfahrzeugs nicht der einen hohen statischen Druck aufweisenden Kernströmung der durch den Stauluftkanal geführten Luftströmung entnommen werden. Stattdessen ist es möglich, entlang der Stauluftkanalwand strömende Luft, die eine hohe Strömungsgeschwindigkeit, aber einen geringen statischen Druck aufweist, aus dem Stauluftkanal abzuzweigen, in dem Speicher strömungstechnisch "aufzubereiten" und schließlich der Belüftungsleitung zuzuführen. Dadurch wird eine Störung der Luftströmung in dem Stauluftkanal vermieden, aber dennoch eine ausreichende Luftzufuhr in die Belüftungsleitung ermöglicht. Vorzugsweise ist der Speicher so ausgelegt, dass durch die Umwandlung zumindest eines Teils des dynamischen Drucks der durch den Stauluftkanal geführten Luftströmung in statischen Druck ein in der Belüftungsleitung auftretender Druckverlust im Wesentlichen ausgeglichen wird. Grundsätzlich führt eine Vergrößerung des Massenstroms in dem Speicher zu einer Erhöhung des statischen Drucks in dem Speicher. Folglich kann in dem Speicher ein umso höherer statischer Druck erzeugt werden, je größer ein Lufteinlass des Speichers ausgebildet ist und je weiter der Lufteinlass des Speichers in die durch den Stauluftkanal geführte Luftströmung reicht. Das Design des Speichers kann somit in vorteilhafter Weise an das Design der Belüftungsleitung angepasst werden. Beispielsweise kann eine in Form einer langen, schmalen Düse ausgebildete Belüftungsleitung, bei deren Durchströmung hohe Druckverluste auftreten, mit einem Speicher mit einem relativ großen Lufteinlass kombiniert werden. Dadurch wird es ermöglicht, die in Form einer Düse ausgebildete Belüftungsleitung mit einem ausreichend hohen statischen Druck zu beaufschlagen. Der Speicher kann auch so ausgelegt sein, dass er eine Strömungssteuerung ermöglicht. Beispielsweise kann durch eine entsprechende Dimensionierung des Speichers eine Beruhigung der Strömung und damit eine bessere Gleichrichtung der Strömung in die Belüftungsleitung realisiert werden.

Wie bereits erwähnt weist der Speicher einen Lufteinlass auf, durch den den Stauluftkanal durchströmende Luft in den Speicher eintreten kann. Der Lufteinlass des Speichers ist dabei so dimensioniert, dass in dem zu belüftenden explosionsgefährdeten Bereich des Luftfahrzeugs eine Luftaustauschrate von 5 pro Minute erreicht wird. Vorzugsweise umfasst der Speicher eine in eine Wand des Stauluftkanals eingelassene Hutze.

Eine Lufteinlassfläche des Speichers kann im Wesentlichen senkrecht zur Strömungsrichtung der den Stauluftkanal durchströmenden Luft ausgerichtet und der Luftströmung zugewandt sein. Dadurch wird ein ausreichender Luftmassenstrom in den Speicher ermöglicht.

In dem Stauluftkanal kann ein Ventilator angeordnet sein, der insbesondere im Bodenbetrieb des Flugzeugs für eine ordnungsgemäße Durchströmung des Stauluftkanals sorgt. Vorzugsweise ist der Ventilator stromaufwärts von dem Speicher in dem Stauluftkanal positioniert.

Bei einer bevorzugten Ausführungsform des erfindungsgemäßen Belüftungssystems ist der zu belüftende Bereich des Luftfahrzeugs mit mindestens einer Entlüftungsöffnung zur Abfuhr der dem zu belüftenden Bereich über die Belüftungsleitung zugeführten Luft versehen. Die mindestens eine Entlüftungsöffnung kann den zu belüftenden Bereich des Luftfahrzeugs mit der Umgebung verbinden und beispielsweise in einer Außenhaut des Luftfahrzeugs angeordnet sein. Vorzugsweise ist die mindestens eine Entlüftungsöffnung in einem zu dem Luftauslass des Stauluftkanals benachbarten Bereich der Luftfahrzeugaußenhaut angeordnet. Durch die hohe Luftaustrittsgeschwindigkeit am Luftauslass des Stauluftkanals wird in der Umgebung des Stauluftkanalauslasses ein Unterdruck erzeugt und folglich eine Injektionsströmung induziert, die die Abströmung der Luft aus dem zu belüftenden Bereich des Luftfahrzeugs fördert. Durch die Anordnung der mindestens einen Entlüftungsöffnung des zu belüftenden Bereichs in unmittelbarer Nachbarschaft zu dem Luftauslass des Stauluftkanals wird somit in einfacher und komfortabler Art und Weise eine ordnungsgemäße Abfuhr der dem zu belüftenden Bereich zugeführten Spülluft aus dem zu belüftenden Bereich gewährleistet.

Bei einem erfindungsgemäßen Verfahren zur Belüftung eines explosionsgefährdeten Bereichs eines Luftfahrzeugs wird Umgebungsluft einer zu kühlenden Einrichtung an Bord des Luftfahrzeugs, beispielsweise Kondensatoren einer Kältemaschine einer Flugzeugklimaanlage, durch einen Stauluftkanal zugeführt. Ferner wird den Stauluftkanal durchströmende Luft durch eine Belüftungsleitung in einen zu belüftenden Bereich des Luftfahrzeugs zugeführt. Der zu belüftende Bereich des Luftfahrzeugs ist beispielsweise ein zu einem Treibstofftank benachbarter Flugzeugbereich, der ausreichend ventiliert werden muss, um die Bildung eines zündfähigen Gasgemischs zu verhindern. Zusätzlich dazu kann die dem zu belüftenden Bereich zugeführte Luft auch als Kühlluft zur Kühlung einer in dem zu belüftenden Bereich angeordneten wärmebelasteten Komponente, beispielsweise einer elektronischen Komponente oder dergleichen dienen. Vor dem Eintritt der Luft in die Belüftungsleitung wird der dynamische Druck der durch den Stauluftkanal geführten Luftströmung in einem zwischen dem Stauluftkanal und einem Lufteinlass der Belüftungsleitung angeordneten Speicher zumindest teilweise in statischen Druck umgewandelt.

Durch die Umwandlung zumindest eines Teils des dynamischen Drucks der durch den Stauluftkanal geführten Luftströmung in statischen Druck wird vorzugsweise ein in der Belüftungsleitung auftretender Druckverlust im Wesentlichen ausgeglichen. Vorzugsweise wird die Luftströmung durch den Stauluftkanal im Bodenbetrieb des Luftfahrzeugs durch einen stromaufwärts von dem Speicher in dem Stauluftkanal angeordneten Ventilator erzeugt.

Die dem zu belüftenden Bereich des Luftfahrzeugs über die Belüftungsleitung zugeführte Luft wird vorzugsweise infolge einer Injektionsströmung, die durch eine aus einem Luftauslass des Stauluftkanals austretende Luftströmung induziert wird, durch mindestens eine Entlüftungsöffnung aus dem zu belüftenden Bereich in die Umgebung abgesaugt.

Ein bevorzugtes Ausführungsbeispiel eines erfindungsgemäßen Systems zur Belüftung eines explosionsgefährdeten Bereichs eines Luftfahrzeugs wird nun anhand der beigefügten schematischen Zeichnungen näher erläutert, von denen
- Figur 1: eine Übersichtsdarstellung eines Systems zur Belüftung eines explosionsgefährdeten Bereichs eine Luftfahrzeugs zeigt, und
- Figur 2: eine dreidimensionale Detailansicht einer vor einem Stauluftkanal abzweigenden Belüftungsleitung und eines zwischen dem Stauluftkanal und dem Lufteinlass der Belüftungsleitung angeordneten Speichers zeigt.

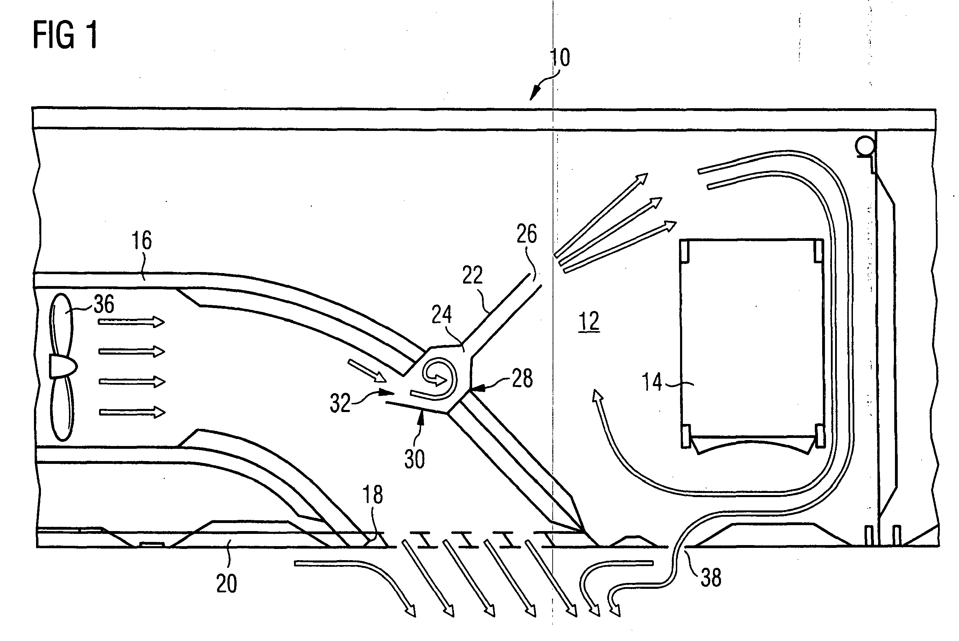

In Figur 1 ist ein System 10 zur Belüftung eines explosionsgefährdeten Bereichs 12 eines Flugzeugs veranschaulicht. Der explosionsgefährdete Flugzeugbereich 12 befindet sich benachbart zu in der Figur 1 nicht gezeigten Treibstofftanks des Flugzeugs. Aus diesem Grund können gegebenenfalls Kerosindämpfe in den Bereich 12 eindringen. In dem Flugzeugbereich 12 ist eine in Form einer Steuereinheit ausgebildete wärmebelastete Komponente 14 angeordnet. Um die Bildung eines zündfähigen Gasgemischs in dem Bereich 12 zu verhindern und dadurch das Risiko einer Treibstoffexplosion zu minimieren, muss der explosionsgefährdete Flugzeugbereich 12 ausreichend ventiliert werden. Darüber hinaus erzeugt die wärmebelastete Komponente 14 eine hohe Wärmelast, die aus dem Flugzeugbereich 12 abgeführt werden muss.

Das Belüftungssystem 10 umfasst einen Stauluftkanal 16, der einen in der Figur 1 nicht gezeigten und in Form eines NACA-Einlasses ausgebildeten Lufteinlass zur Zufuhr von Umgebungsluft in den Stauluftkanal 16 aufweist. Der Lufteinlass des Stauluftkanals 16 ist ebenso wie ein Luftauslass 18 in einer Außenhaut 20 des Flugzeugs ausgebildet. Der Stauluftkanal 16 dient dazu, Kondensatoren einer Kältemaschine eines Flugzeugkühlsystems Stauluft und damit Kühlenergie zuzuführen.

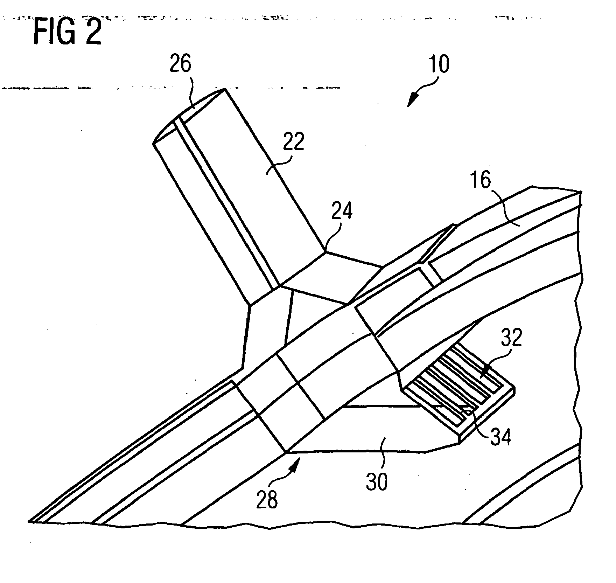

Von dem Stauluftkanal 16 zweigt eine Belüftungsleitung 22 ab. Die Belüftungsleitung 22 umfasst einen Lufteinlass 24 sowie einen Luftauslass 26 und ist in Form einer relativ schmalen, langgestreckten Düse ausgebildet, die sich im Wesentlichen über die gesamte Breite des einen im Wesentlichen rechteckigen Querschnitt aufweisenden Stauluftkanals 16 erstreckt (siehe Figur 2). Der Luftauslass 16 der Belüftungsleitung 22 mündet in den zu belüftenden Flugzeugbereich 12, so dass den Stauluftkanal 16 durchströmende Luft über die Belüftungsleitung 22 in den zu belüftenden Bereich 12 geleitet werden kann.

Ein zwischen dem Stauluftkanal 16 und dem Lufteinlass 24 der Belüftungsleitung 22 angeordneter Speicher 28 dient dazu, den dynamischen Druck der durch den Stauluftkanal 16 geführten Luftströmung zumindest teilweise in statischen Druck umzuwandeln. Wie insbesondere aus Figur 2 ersichtlich wird, weist der Speicher 28 eine in eine Wand des Stauluftkanals 16 eingelassene Hutze 30 auf. Eine Lufteinlassfläche 32 des Speichers 28 ist im Wesentlichen senkrecht zur Strömungsrichtung der den Stauluftkanal 16 durchströmenden Luft ausgerichtet und der Luftströmung zugewandt. Ein im Bereich der Lufteinlassfläche 32 des Speichers 28 angeordnetes Gitter 34 sorgt für eine entsprechende Strömungssteuerung im Bereich der Lufteinlassfläche 32 des Speichers 28.

Der Speicher 28 ist so ausgelegt, dass durch die Umwandlung zumindest eines Teils des dynamischen Drucks der durch den Stauluftkanal 16 geführten Luftströmung in statischen Druck ein in der Belüftungsleitung 22 auftretender Druckverlust im Wesentlichen ausgeglichen wird. Dadurch wird eine ausreichende Luftzufuhr in die Belüftungsleitung 22 ermöglicht, um in dem zu belüftenden Flugzeugbereich 12 eine Luftaustauschrate von 5 Mal pro Minute zu realisieren. Darüber hinaus wird die Strömung in dem Speicher 28 beruhigt, so dass eine bessere Gleichrichtung und folglich eine gleichmäßige Verteilung der Strömung über die gesamte Breite der Belüftungsleitung 22 erzielt werden kann. Schließlich ist die Hutze 30 des Speichers 28 so dimensioniert, dass die dem Speicher 28 zugeführte Luft im Wesentlichen einer entlang der Stauluftkanalwand strömenden Luftschicht entnommen werden kann und somit die Kernströmung der durch den Stauluftkanal 16 geführten Luftströmung nicht gestört wird.

Stromaufwärts von dem Speicher 28 ist in dem Stauluftkanal ein Ventilator 36 angeordnet. Der Ventilator dient dazu, im Bodenbetrieb des Flugzeugs eine erforderliche Luftströmung durch den Stauluftkanal 16 zu erzeugen. Bei Bedarf kann der Ventilator 36 selbstverständlich auch im Flugbetrieb des Flugzeugs aktiviert werden. Er ist jedoch nicht dazu ausgelegt, für einen ausreichenden Luftdurchsatz durch die Belüftungsleitung 22 zu sorgen, sondern dient lediglich zur Luftzufuhr zu der zu kühlenden Komponente der Flugzeugkältemaschine. Die Luftströmung durch die Belüftungsleitung 22 wird im Wesentlichen durch den Speicher 28 sowie die Dimensionierung der Eintrittsöffnungen in die Hutze 30 gesteuert.

Nach dem Durchströmen des Flugzeugbereichs 12 muss die dem Bereich 12 über die Belüftungsleitung 22 zugeführte Luft wieder aus den Bereich 12 ausgeblasen werden, um die erforderliche hohe Luftaustauschrate von 5 pro Minute sowie eine ausreichende Wärmeabfuhr von der wärmebelasteten Komponente 14 zu gewährleisten. Die Luftabfuhr aus dem Bereich 12 erfolgt durch eine in der Flugzeugaußenhaut 20 ausgebildete Entlüftungsöffnung 38. Die Entlüftungsöffnung 38 ist benachbart zu dem Luftauslass 18 des Stauluftkanals 16 in der Flugzeugaußenhaut 20 ausgeführt. Durch die hohe Austrittsgeschwindigkeit der Luft aus dem Luftauslass 16 des Stauluftkanals 16 entsteht im Bereich des Luftauslasses 18 des Stauluftkanals 16 ein Unterdruck. Folglich wird eine Injektionsströmung induziert, durch die Luft durch die Entlüftungsöffnung 38 aus dem Flugzeugbereich 12 gesaugt wird. Durch die Anordnung der Entlüftungsöffnung 38 benachbart zu dem Luftauslass 18 des Stauluftkanals 16 wird somit die Abströmung der Luft aus dem explosionsgefährdeten Bereich 12 gefördert.

## Patentansprüche

1. System (10) zur Belüftung eines Bereichs (12) eines Luftfahrzeugs, mit:
- einem Stauluftkanal (16), der einen Lufteinlass zur Zufuhr von Umgebungsluft in den Stauluftkanal (16) sowie einen Luftauslass (18) aufweist, wobei der Stauluftkanal (16) dazu eingerichtet ist, einer zu kühlenden Einrichtung an Bord des Luftfahrzeugs Luft zuzuführen, und
- einer Belüftungsleitung (22), die einen Lufteinlass (24) zur Zufuhr von den Stauluftkanal (16) durchströmender Luft in die Belüftungsleitung (22) sowie einen Luftauslass (26) aufweist, wobei die Belüftungsleitung (22) dazu eingerichtet ist, dem zu belüftenden Bereich (12) des Luftfahrzeugs Luft zuzuführen,
**gekennzeichnet durch** einen zwischen dem Stauluftkanal (16) und dem Lufteinlass (24) der Belüftungsleitung (22) im Bereich einer Wand des Stauluftkanals (16) angeordneten Speicher (28), der dazu eingerichtet ist, den dynamischen Druck der **durch** den Stauluftkanal (16) geführten Luftströmung zumindest teilweise in statischen Druck umzuwandeln.

2. Belüftungssystem nach Anspruch 1,
**dadurch gekennzeichnet, dass** der Speicher (28) so ausgelegt ist, dass durch die Umwandlung zumindest eines Teils des dynamischen Drucks der durch den Stauluftkanal (16) geführten Luftströmung in statischen Druck ein im Betrieb des Belüftungssystems in der Belüftungsleitung (22) auftretender Druckverlust im Wesentlichen ausgeglichen wird.

3. Belüftungssystem nach Anspruch 1 oder 2,
**dadurch gekennzeichnet, dass** der Speicher (28) eine in eine Wand des Stauluftkanals (16) eingelassenen Hutze (30) umfasst.

4. Belüftungssystem nach einem der Ansprüche 1 bis 3,
**dadurch gekennzeichnet, dass** eine Lufteinlassfläche (32) des Speichers (28) im Wesentlichen senkrecht zur Strömungsrichtung der den Stauluftkanal (16) durchströmender Luft ausgerichtet und der Luftströmung zugewandt ist.

5. Belüftungssystem nach einem der Ansprüche 1 bis 4,
**gekennzeichnet durch** einen stromaufwärts von dem Speicher (28) in dem Stauluftkanal (16) angeordneten Ventilator (36).

6. Belüftungssystem nach einem der Ansprüche 1 bis 5,
**dadurch gekennzeichnet, dass** der zu belüftende Bereich (12) des Luftfahrzeugs mit mindestens einer Entlüftungsöffnung (38) zur Abfuhr der dem zu belüftenden Bereich (12) über die Belüftungsleitung (22) zugeführten Luft in die Umgebung versehen ist, wobei die Entlüftungsöffnung (38) in einem zu dem Luftauslass (18) des Stauluftkanals (16) benachbarten Bereich einer Luftfahrzeugaußenhaut (20) angeordnet sind, in dem eine aus dem Stauluftkanal (16) austretende Luftströmung eine Injektionsströmung induziert.

7. Verfahren zur Belüftung eines Bereichs (12) eines Luftfahrzeugs, mit den Schritten:
- Zuführen von Umgebungsluft zu einer zu kühlenden Einrichtung an Bord des Luftfahrzeugs durch einen Stauluftkanal (16), und
- Zuführen von den Stauluftkanal (16) durchströmender Luft in den zu belüftenden Bereich (12) des Luftfahrzeugs durch eine Belüftungsleitung (22),
**dadurch gekennzeichnet, dass** der dynamische Druck der durch den Stauluftkanal (16) geführten Luftströmung vor dem Eintritt der Luft in die Belüftungsleitung (22) in einem zwischen dem Stauluftkanal (16) und einem Lufteinlass (24) der Belüftungsleitung (22) im Bereich einer Wand des Stauluftkanals (16) angeordneten Speicher (28) zumindest teilweise in statischen Druck umgewandelt wird.

8. Belüftungsverfahren nach Anspruch 7,
**dadurch gekennzeichnet, dass** durch die Umwandlung zumindest eines Teils des dynamischen Drucks der durch den Stauluftkanal (16) geführten Luftströmung in statischen Druck ein während der Durchführung des Belüftungsverfahrens in der Belüftungsleitung (22) auftretender Druckverlust im Wesentlichen ausgeglichen wird.

9. Belüftungsverfahren nach Anspruch 7 oder 8,
**dadurch gekennzeichnet, dass** die Luftströmung durch den Stauluftkanal (16) im Bodenbetrieb des Luftfahrzeugs durch einen stromaufwärts von dem Speicher (28) in dem Stauluftkanal (16) angeordneten Ventilator (36) erzeugt wird.

10. Belüftungsverfahren nach einem der Ansprüche 7 bis 9,
**dadurch gekennzeichnet, dass** die dem zu belüftenden Bereich (12) des Luftfahrzeugs über die Belüftungsleitung (22) zugeführte Luft infolge einer Injektionsströmung, die durch eine aus einem Luftauslass (18) des Stauluftkanals (16) austretende Luftströmung induziert wird, durch mindestens eine Entlüftungsöffnung (38) aus dem zu belüftenden Bereich (12) in die Umgebung abgesaugt wird.

## Claims

1. System (10) for ventilating a region (12) of an aircraft, comprising:
- a ram-air channel (16), which has an air inlet for feeding ambient air into the ram-air channel (16) as well as an air outlet (18), wherein the ram-air channel (16) is adapted to feed air to a device that is to be cooled on board the aircraft, and
- a ventilation line (22), which has an air inlet (24) for feeding air flowing through the ram-air channel (16) into the ventilation line (22) as well as an air outlet (26), wherein the ventilation line (22) is adapted to feed air to the region (12) of the aircraft that is to be ventilated,
**characterised by** an accumulator (28), which is disposed between the ram-air channel (16) and the air inlet (24) of the ventilation line (22) in the region of a wall of the ram-air channel (16) and which is adapted to convert the dynamic pressure of the air flow conveyed through the ram-air channel (16) at least partially into static pressure.

2. Ventilation system according to claim 1,
**characterized in that** the accumulator (28) is so designed that by virtue of the conversion of at least a part of the dynamic pressure of the air flow conveyed through the ram-air channel (16) into static pressure a pressure loss arising in the ventilation line (22) during operation of the ventilation system is substantially compensated.

3. Ventilation system according to claim 1 or 2,
**characterized in that** the accumulator (28) comprises an air scoop (30) that is incorporated into a wall of the ram-air channel (16).

4. Ventilation system according to one of claims 1 to 3,
**characterized in that** an air inlet area (32) of the accumulator (28) is aligned substantially at right angles to the direction of flow of the air flowing through the ram-air channel (16) and faces towards the air flow.

5. Ventilation system according to one of claims 1 to 4,
**characterized by** a fan (36) that is disposed upstream of the accumulator (28) in the ram-air channel (16).

6. Ventilation system according to one of claims 1 to 5,
**characterized in that** the region (12) of the aircraft to be ventilated is provided with at least one air discharge opening (38) for removing into the environment the air fed through the ventilation line (22) to the region (12) to be ventilated, wherein the air discharge opening (38) are disposed in a region of an aircraft outer skin (20) that is adjacent to the air outlet (18) of the ram-air channel (16) and in which an air flow exiting from the ram-air channel (16) induces an injection flow.

7. Method of ventilating a region (12) of an aircraft, comprising the steps:
- feeding ambient air through a ram-air channel (16) to a device that is to be cooled on board the aircraft,
- feeding air, which is flowing through the ram-air channel (16), through a ventilation line (22) into the region (12) of the aircraft that is to be ventilated, wherein the dynamic pressure of the air flow conveyed through the ram-air channel (16) is converted prior to entry of the air into the ventilation line (22) at least partially into static pressure in an accumulator (28), which is disposed between the ram-air channel (16) and an air inlet (24) of the ventilation line (22) in the region of a wall of the ram-air channel (16).

8. Ventilation method according to claim 7,
**characterized in that** by virtue of the conversion of at least a part of the dynamic pressure of the air flow conveyed through the ram-air channel (16) into static pressure a pressure loss arising in the ventilation line (22) during implementation of the ventilation method is substantially compensated.

9. Ventilation method according to claim 7 or 8,
**characterized in that** the air flow through the ram-air channel (16) is generated during operation of the aircraft on the ground by means of a fan (36), which is disposed upstream of the accumulator (28) in the ram-air channel (16).

10. Ventilation method according to one of claims 7 to 9,
**characterized in that** the air fed through the ventilation line (22) to the region (12) of the aircraft to be ventilated is sucked from the region (12) to be ventilated into the environment through at least one air discharge opening (38) as a result of an injection flow that is induced by means of an air flow exiting from an air outlet (18) of the ram-air channel (16).

## Revendications

1. Système (10) pour ventiler une zone (12) d'un aéronef, comprenant:
- un canal d'air dynamique (16) qui présente une entrée d'air pour faire pénétrer dans ledit canal d'air dynamique (16) de l'air provenant de l'environnement, et une sortie d'air (18), ce canal d'air dynamique (16) étant conçu pour amener de l'air à un aménagement à refroidir à bord de l'aéronef, et
- une conduite de ventilation (22) qui présente une entrée d'air (24) pour faire pénétrer dans la conduite de ventilation (22) de l'air s'écoulant à travers le canal d'air dynamique, et une sortie d'air (26), cette conduite de ventilation (22) étant conçue pour amener de l'air à la zone (12) à ventiler de l'aéronef,
**caractérisé par** un réservoir-accumulateur (28) disposé entre le canal d'air dynamique (16) et l'entrée d'air (24) de la conduite de ventilation (22), dans la zone d'une paroi du canal d'air dynamique (16), lequel réservoir-accumulateur est conçu pour transformer au moins pour partie en pression statique la pression dynamique du courant d'air dirigé à travers le canal d'air dynamique (16).

2. Système de ventilation selon la revendication 1,
**caractérisé en ce que** le réservoir-accumulateur (28) est conçu de manière à compenser pour l'essentiel une perte de pression survenant dans la conduite de ventilation (22) pendant la marche du système de ventilation, du fait de la transformation en pression statique d'au moins une partie de la pression dynamique du courant d'air dirigé à travers le canal d'air dynamique (16).

3. Système de ventilation selon la revendication 1 ou 2,
**caractérisé en ce que** le réservoir-accumulateur (28) comporte une prise d'air (30) insérée dans une paroi du canal d'air dynamique (16).

4. Système de ventilation selon l'une des revendications 1 à 3,
**caractérisé en ce qu'**une surface d'entrée d'air (32) de le réservoir-accumulateur (28) est orientée dans une direction sensiblement perpendiculaire au sens de l'écoulement de l'air dans le canal d'air dynamique (16) et tournée vers le courant d'air.

5. Système de ventilation selon l'une des revendications 1 à 4,
**caractérisé par** un ventilateur (36) disposé en amont de le réservoir-accumulateur (28) dans le canal d'air dynamique (16).

6. Système de ventilation selon l'une des revendications 1 à 5,
**caractérisé en ce que** la zone (12) à ventiler de l'aéronef est pourvue d'au moins une ouverture d'échappement (38) pour l'évacuation dans l'environnement de l'air amené à la zone à ventiler par la conduite de ventilation (22), ladite ouverture d'échappement (38) étant disposée dans une zone de l'enveloppe extérieure (20) de l'aéronef, laquelle zone est adjacente à la sortie d'air (18) du canal d'air dynamique (16) et dans laquelle un courant d'injection est induit à partir du courant d'air sortant du canal d'air dynamique (16).

7. Procédé pour ventiler une zone (12) d'un aéronef, comprenant les étapes suivantes :
- amenée de l'air provenant de l'environnement à un aménagement à refroidir à bord de l'aéronef, par le canal d'air dynamique (16), et
- amenée de l'air s'écoulant à travers le canal d'air dynamique (16) à la zone (12) à ventiler à l'intérieur de l'aéronef, par une conduite de ventilation (22),
**caractérisé en ce que** la pression dynamique du courant d'air dirigé à travers le canal d'air dynamique (16) est transformé au moins pour partie en pression statique dans un réservoir-accumulateur (28) disposé entre le canal d'air dynamique (16) et l'entrée d'air (24) de la conduite de ventilation (22), dans la zone d'une paroi du canal d'air dynamique (16), avant que l'air ne pénètre dans la conduite de ventilation (22).

8. Procédé de ventilation selon la revendication 7,
**caractérisé en ce qu'**une perte de pression survenant dans la conduite de ventilation (22) pendant la mise en oeuvre du procédé de ventilation, du fait de la transformation en pression statique d'au moins une partie de la pression dynamique du courant d'air dirigé à travers le canal d'air dynamique (16), est sensiblement compensée.

9. Procédé de ventilation selon la revendication 7 ou 8,
**caractérisé en ce que** le courant d'air à travers le canal d'air dynamique (16) pendant la marche au sol de l'aéronef est engendré par un ventilateur (36) disposé en amont de le réservoir-accumulateur (28), à l'intérieur du canal d'air dynamique (16).

10. Procédé de ventilation selon l'une des revendications 7 à 9,
**caractérisé en ce que** l'air amené par la conduite de ventilation (22) à la zone à ventiler (12) de l'aéronef suite au courant d'injection induit par un courant d'air s'échappant d'une sortie d'air (18) du canal d'air dynamique (16) est aspiré et évacué dans l'environnement par au moins une ouverture d'échappement (38) de la zone à ventiler (12).
